(19) Europäisches Patentamt

European Patent Office

Office européen des brevets

(11) EP 1 028 323 A2

(12) EUROPÄISCHE PATENTANMELDUNG

(43) Veröffentlichungstag:
16.08.2000 Patentblatt 2000/33

(51) Int. Cl.⁷: **G01S 13/24**, G01S 13/524, G01S 13/22

(21) Anmeldenummer: 00102740.8

(22) Anmeldetag: 10.02.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.02.1999 DE 19906089**

(71) Anmelder: **DaimlerChrysler AG**
**70567 Stuttgart (DE)**

(72) Erfinder:
• **Hommel, Hans**
**88255 Baindt (DE)**
• **Nagel, Dieter**
**89155 Erbach (DE)**
• **Behrens, Marc**
**38154 K-nigslutter (DE)**
• **Mende, Ralph**
**38106 Braunschweig (DE)**

(54) **Verfahren zur Signalerzeugung und -verarbeitung in Impuls-Radargeräten**

(57) Es wird ein Verfahren zur Signalerzeugung und Signalverarbeitung in Impuls-Radargeräten zur Detektion von Radarzielen beschrieben, das sich insbesondere dadurch auszeichnet, daß sich wiederholende Pulsfolgen ausgesendet werden, die jeweils eine erste und eine zweite vorbestimmten Anzahl (E, V) von einzelnen Impulsen aufweisen, deren Trägerfrequenzen jeweils eine vorbestimmte Differenz Df zueinander aufweisen, und daß die durch Reflexion empfangenen Signale zum Erkennen und Ausblenden von Cluttersignalen im Hinblick auf die Impulslaufzeit und eine Dopplerverschiebung ausgewertet werden.

FIG. 1

EP 1 028 323 A2

**Beschreibung**

Die Erfindung betrifft ein Verfahren zur Signalerzeugung und Signalverarbeitung in Impuls-Radargeräten zur Detektion von Radarzielen, insbesondere für Bord-Radargeräte von Luftfahrzeugen, gemäß dem Oberbegriff von Anspruch 1.

Bord-Radargeräte in Luftfahrzeugen arbeiten im allgemeinen mit einer phasengesteuerten Antenne (Phased-Array- oder Active-Array-Antenne). Neben den allgemein bekannten Vorteilen wie einfache Schwenkbarkeit, geringer Platzbedarf, hohe Zuverlässigkeit usw. haben diese Antennen im Hinblick auf ihr Strahlungsdiagramm jedoch auch Nachteile, die in erster Linie in den relativ starken Nebenkeulen bestehen. Über diese Nebenkeulen können insbesondere Festzeichenziele (Clutter) vom Boden empfangen werden, die Störungen bei der Auswertung und Interpretation der empfangenen Signale verursachen. Dieses Problem kann insbesondere deshalb sehr schwerwiegend sein, weil der gewünschte eindeutige Entfernungsmeßbereich von 5, 10 oder 15 Kilometern, auf den die Länge und der Abstand der Sendeimpulse dimensioniert ist, im allgemeinen genau der Flughöhe entspricht.

Es ist bekannt, den Empfang dieser Festzeichenziele durch geeignete Beeinflussung des Antennendiagramms zumindest so weit zu dämpfen, daß dadurch im allgemeinen keine Störungen mehr auftreten. Diese Maßnahmen sind jedoch relativ aufwendig oder nur begrenzt wirksam.

Der Erfindung liegt deshalb die Aufgabe zugrunde, ein Verfahren zur Signalerzeugung und Signalverarbeitung in Impuls-Radargeräten zur Detektion von Radarzielen, zu schaffen, mit dem eine wesentlich wirksamere Unterdrückung von Festzeichenzielen (Clutter) möglich ist.

Die erfindungsgemäße Lösung dieser Aufgabe ist in Anspruch 1 angegeben. Die Unteransprüche haben vorteilhafte Weiterbildungen der Erfindung zum Inhalt.

Die Aufgabe wird mit einem Verfahren der eingangs genannten Art gelöst, das sich dadurch auszeichnet, daß sich wiederholende Pulsfolgen ausgesendet werden, die jeweils eine erste und eine zweite vorbestimmten Anzahl (E, V) von einzelnen Impulsen aufweisen, deren Trägerfrequenzen jeweils eine vorbestimmte Differenz Df zueinander aufweisen, und daß die durch Reflektion empfangenen Signale zum Erkennen und Ausblenden von Cluttersignalen im Hinblick auf die Impulslaufzeit und eine Dopplerverschiebung ausgewertet werden.

Fig. 6a und b      Formen von empfangenen, verzerrten Impulsen im Zeit- bzw. Frequenzbereich;

Fig. 7      ein Diagramm des Einflusses von verzerrten Impulsen auf die Clutter-Störungen;

Fig. 8      ein Diagramm des Zusammenhangs zwischen Entfernung und Anzahl von eindeutigen Bereichen für verschiedene Pulsfolgefrequenzen.

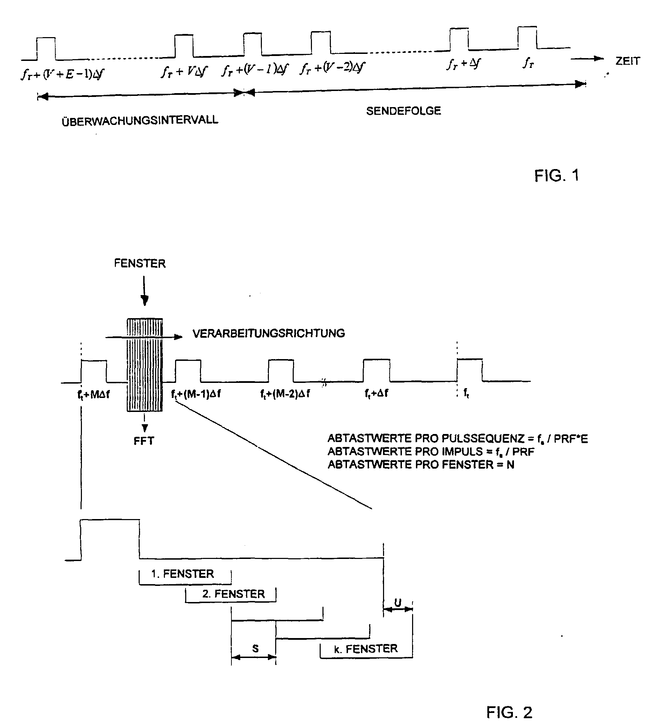

Ein erfindungsgemäßes Sendesignal besteht gemäß Figur 1 aus Folgen von V+E einzelnen Impulsen (Pulszug), die frequenzmoduliert sind, um E Entfernungsbereiche eindeutig unterscheiden zu können. Die ersten E Impulse (z.B. ist E = 12) dienen dabei als Überwachungsintervall, mit dem Zielechos aus allen E Entfernungsbereichen durch Auswertung der Empfangssignale von allen anderen Puls-Bereichen gefunden werden können.

Das Senden der E-Pulse als Guardintervall ist rein optional. Es dient dazu, einen stationären Zustand zu erreichen und bei der Verarbeitung der folgenden V Pulse maximale Energie von den Zielen im Beobachtungsraum zu haben. Bei der Signalverarbeitung zur Detektion wird die zurückgestreute Energie aufaddiert, um damit die Detektion zu verbessern. Ohne Guardintervall würde ein weit entferntes Ziel aus dem k. Entfernungseindeutigkeitsbereich (k<E) keinen Energiebeitrag vor dem k. Puls zur Signalverarbeitung liefern und hätte somit für die Detektion eine um k/V niedrigere Energie. Um diesen Effekt zu vermeiden, wird das Guardintervall dem Sendezug von V Pulsen vorangestellt.

Die Trägerfrequenz $f_t$ (z.B. 8,5 GHz) des ersten Impulses einer Pulsfolge beträgt dabei $f_{t,1} = f_t + (V + E - 1) \, Df$, wobei V typischerweise Werte von 64 oder 128 annehmen kann. Die Trägerfrequenz jedes folgenden Impulses wird um Df vermindert, so daß der letzte Impuls jeder Folge mit der Frequenz $f_{t(V+E)} = f_t$ gesendet wird, bevor anschließend mit einer neuen Pulsfolge wieder mit der ersten Trägerfrequenz begonnen wird. Der Wert von $Df = f_a / E$, wobei $f_a$ = Abtastfrequenz pro Pulsfolge (z.B. 3,9375 MHz), so daß sich Df = 328,125 KHz ergibt.

Wichtig ist, daß der Frequenzversatz Df mindestens doppelt so groß ist wie die maximal auftretende Dopplerfrequenz $f_{Dmax} = 2 v_{max} f_t / c$, da die empfangenen Signale ansonsten nicht im Hinblick auf ihre Frequenz eingeordnet werden können und die Entfernungsmessung mehrdeutig wird.

Jedes empfangene Impuls-Signal wird mit der mit dem jeweiligen Entfernungsbereich korrespondierenden Sendefrequenz heruntergemischt. Die Frequenzmodulation kann mit einem einstellbaren Frequenzoszillator durchgeführt werden. Aufgrund der Frequenzmodulation können durch entsprechende Auswertung, die nachfolgend beschrieben wird, nun E eindeutige Entfernungsbereiche unterschieden werden, die jeweils durch $R_{eind} = c / 2PRF$ (R = Entfernung, PRF = Pulse Repetition Frequency - Pulsfolgefrequenz von z.B. 7,5 KHz) gegeben sind.

Figur 2 zeigt schematisch einen ersten Signalverarbeitungsschritt, mit dem das empfangene Signal abgetastet wird. In jedem Pulsintervall werden $f_a$/PRF Abtastwerte genommen. Diese werden nacheinander abgearbeitet. Dazu wird ein Fenster der Größe N<$f_a$/PRF über die Abtastwerte gelegt. Die Abtastwerte im Fenster werden mit einer Fenstertunktion gewichtet und anschließend mit Hilfe der FFT (Fast Fourier Transformation) in dem Spektralbereich transformiert. Anschließend wird das Abtastfenster um s-Schritte verschoben.

Der ganze Vorgang wird so lange wiederholt, bis alle Abtastwerte des Pulzuges bearbeitet worden sind. Weiterhin ist zu beachten, daß das Abtastfenster schon in den Bereich des nächsten Pulses hineinragen kann. Diese U Abtastwerte, die schon zum nächsten Pulsintervall gehören, dürfen in der Signalverarbeitung nicht berücksichtigt werden und müssen daher zu Null gesetzt werden.

Der Verschiebeparameter s des Abtastfensters gibt die später erzielbare Entfernungsschätzgenauigkeit an. Dabei gilt, je kleiner s, um so größer die Schätzgenauigkeit. Der Parameter s beeinflußt aber auch den Rechen- und Speicheraufwand. Hier kann je nach verfügbarer Rechenleistung und gewünschter Schätzgenauigkeit ein geeigneter Kompromiß gewählt werden. Gleichzeitig ist es wünschenswert, den Parameter U klein zu halten, um maximale Energie im Abtastfenster zu haben.

Nach dem ersten Verarbeitungsschritt ist die Entfernungsauflösung DR = (c $D_u$) / (2 PRF) , wobei $D_u$ das Tastverhältnis (z.B. 0,12) bezeichnet. Die Entfernungsauflösung ist abhängig von der Anzahl der Fenster und dem Parameter SPACER und somit von der zur Verfügung stehenden Rechenleistung. Die Geschwindigkeit ist durch die Doppler-Umsetzung der spektralen Linie in den entsprechenden Entfernungsbereich gegeben. Diese kann mit der sehr geringen Auflösung von $Df_D = f_a$ / N (wobei z.B. N = 128) gemessen werden, so daß sich eine Auflösung von etwa 30 KHz ergibt. Daraus ergibt sich Dv = 542,8 m/s.

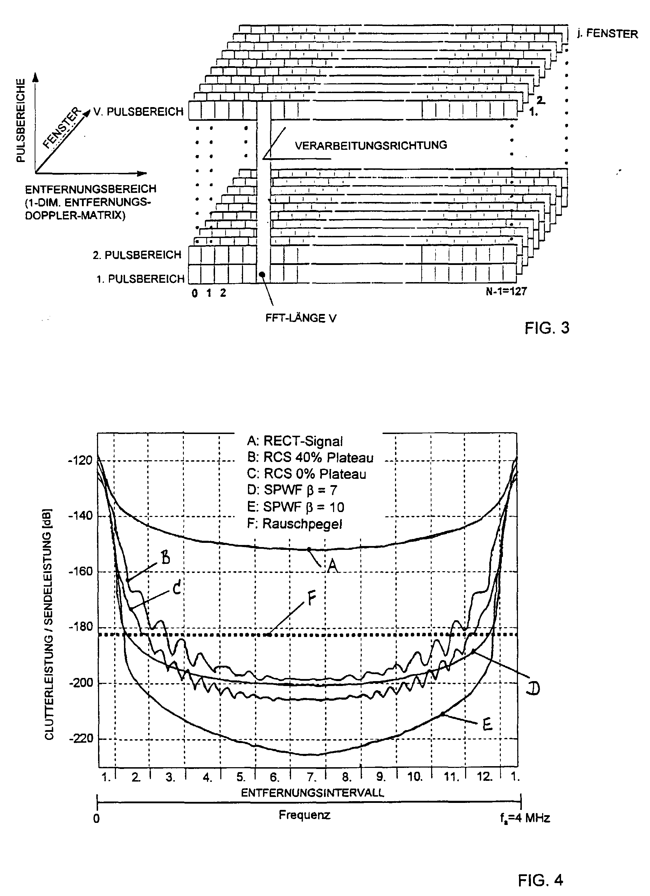

Mit dem in Figur 3 gezeigten zweiten Signalverarbeitungsschritt werden dann die gleichen spektralen Komponenten wie im ersten Verarbeitungsschritt einer FFT unterzogen, jedoch nicht nur für E Pulse, sondern für V Pulse. Dies dient dazu, den Einfluß des Rauschens zu reduzieren und die Genauigkeit der Dopplermessung zu verbessern.

Die mit dem zweiten Signalverarbeitungsschritt erzeugte Entfernungs-Dopplerkarte wird zur Detektion verwendet, wobei CFAR(Constant-False-Alarm-Rate)-Algorithmen zur Unterscheidung zwischen Zielen, Rauschen und Clutter verwendet werden können.

Nach dem zweiten Verarbeitungsschritt bleibt die Entfernungsauflösung unverändert. Die Doppler-Auflösung und die Doppler-Verschiebung sind nun jedoch genauer erfaßbar. Die Doppler-Auflösung ist nun durch die Pulswiederholfrequenz PRF wie folgt gegeben: $Df_{D,2}$ = PRF/V+nPRF , n Element der Menge der ganzen Zahlen. Diese Messung ist mehrdeutig. Mit zwei Messungen mit unterschiedlichen Pulswiederholfrequenzen kann die Eindeutigkeit hergestellt werden.

Das Hauptproblem bei dieser Auswertung stellen die Clutter-Einflüsse dar. Im Vergleich zu der Sendeleistung kann die Clutter-Leistung bis zu -100 dB betragen. Die Clutter-Signale werden hauptsächlich durch die Flughöhe, die Art des Geländes und die Antennencharakteristik bestimmt. Ziel-Echos können im Vergleich zu den Clutter-Signalen eine Leistung von weniger als -80 bis -120 dB haben. Da jedoch die Clutter-Signale aus dem ersten Entfernungsbereich stammen, ist der Clutter-Einfluß spektral begrenzt. Deshalb könnte man auf eine Detektion und Auswertung von Zielechos im ersten Entfernungsintervall aufgrund der Clutter-Signale verzichten. Lediglich die durch Fensterung bei der Fast-Fourier-Transformation entstehenden Nebenzipfel des Clutter-Spektrums können mit Zielen in anderen Entfernungsbereichen übereinstimmen.

Figur 4 zeigt den Einfluß verschiedener Pulsformen auf die Neben-Clutter im ersten Verarbeitungsschritt bei einer FFT-Länge N = V = 128 , einer Abtastfrequenz $f_a$ pro Sequenz von 3,9375 MHz, einem Tastverhältnis $D_u$ von 12% und einer Verschiebung des Abtastfensters um jeweils s=57 Werte.

Wenn rechteckige Pulse verwendet werden, kann der Clutter-Einfluß auf andere Entfernungsbereiche im Vergleich zu dem ersten Entfernungsbereich bis zu -13 dB betragen. Mit Kerb- oder Fallenfiltern oder durch Ausblendung des Spektrums des ersten Entfernungsintervalls können die über die Nebenkeulen empfangenen Clutter-Signale nicht beseitigt werden. Es ist jedoch möglich, durch geeignete Pulsformung die Nebenkeulen-Clutter zumindest zu vermindern.

Die in Figur 4 dargestellte Clutter-Leistung ist die mittlere Clutter-Leistung für alle Fenster. Die Nebenkeulen der rechteckigen Pulse sind sehr hoch, so daß sie leicht mit Ziel-Echos zusammenfallen können. Aufgrund der Puls-Formung können die Nebenkeulen-Clutter um 60 dB oder mehr reduziert werden. Die in dieser Hinsicht besonders vorteilhaften Impuls-Formen haben sphäroidische Wellenfunktionen (SPWF) oder sind ansteigende Cosinus-Pulse (RCS) ohne Plateau.

In Tabelle 1 ist die Abhängigkeit der Clutter-Störungen von der Pulsform, der FFT-Länge und der Umsetzung des Abtastfensters angegeben. Hierbei ist die Pulsfolgefrequenz PRF = 7,5 KHz und der Frequenzversatz zwischen den einzelnen Impulsen Df = 328,125 KHz.

Tabelle 1

| Wellenform | $L_c$ | $f_a$[MHz] | N | s | A [dB] | B [dB] | C [dB] |
|---|---|---|---|---|---|---|---|
| RECT | 63 | 3,9375 | 128 | 57 | -1120 | -151,7 | -117,6 |
| RCS 40% Plateau | 63 | 3,93750 | 128 | 57 | -115,2 | -198,4 | -120,9 |
| RCS 0% Plateau | 63 | 3,9375 | 128 | 57 | -117,9 | -205,6 | -123,7 |
| SPWF b = 7 | 63 | 3,9375 | 128 | 57 | -118,5 | -200,5 | -124,4 |
| SPWF b = 10 | 63 | 3,9375 | 128 | 57 | -119,5 | -225,2 | -125,9 |

"A" bezeichnet die Summe von $|c(f_i)|^2$ für i = 1 bis i = N, das heißt die mittlere gesamte Clutter-Leistung;
"B" bezeichnet $|c(f_{N/2})|^2$, das heißt die minimale Clutter-Leistung; während
"C" den Wert $|c(f_1)|^2$ bezeichnet, das heißt die maximale Clutter-Leistung bei einer diskreten Frequenz darstellt.

Die Ergebnisse zeigen, daß die Gesamt-Clutterleistung nahezu konstant ist, daß jedoch die geringste und die höchste spektrale Clutter-Leistung in starkem Maße von der Art der Wellenform abhängt.

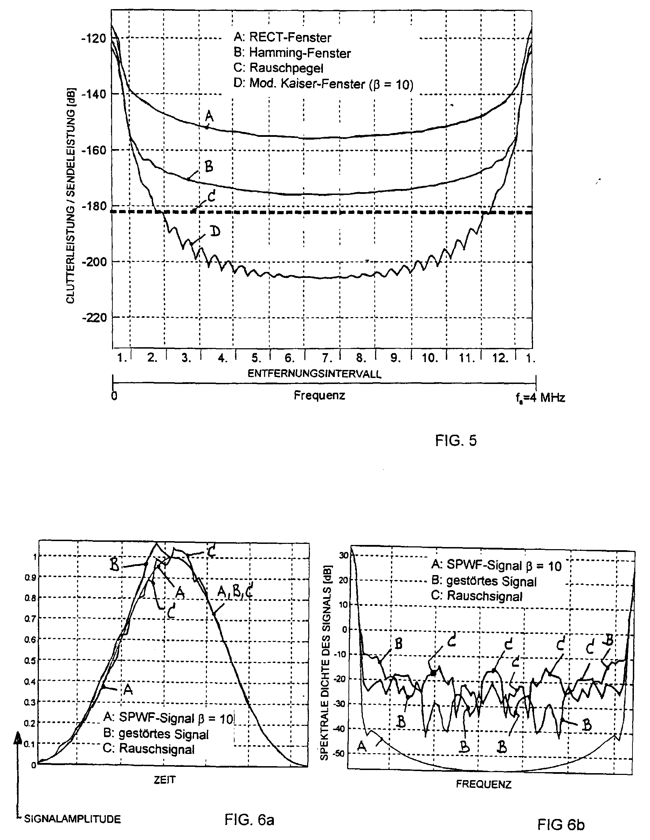

Eine weitere Möglichkeit zur Reduzierung des Einflusses von über die Nebenkeulen empfangenen Clutter-Signalen besteht in einer Gewichtung der Fensterfunktion. Der Einfluß einiger typischer Fenster-Funktionen auf die Clutter-Störung ist mit Pulsen mit ansteigender Cosinus-Form und 0% Plateau untersucht worden. Die Ergebnisse sind in Tabelle 2 angegeben und für einige Fälle in Figur 5 grafisch dargestellt.

Die Unterschiede bei der Verwendung von Hann-, Blackman-, Kaiser- und dem modifizierten Kaiser-Fenster sind im wesentlichen vernachlässigbar. Der Einfluß der Clutter-Nebenkeulen in dem zweiten Entfernungsintervall ist bei Verwendung des Hann-Fensters jedoch nicht vernachlässigbar. Mit allen diesen Fenster-Funktionen sind die Nebenkeulen in dem interessierenden Bereich geringer, als der Rauschleistungspegel.

Tabelle 2

| Einfluß der Fensterfunktionen auf die Clutter-Störungen (Wellenform RCS 0%, N = 128, $f_a$ = 3,9375 MHz, $D_u$ = 12% und s = 57) | | | |
|---|---|---|---|
| **Fenster-Funktion** | **A [dB]** | **B [dB]** | **C [dB]** |
| RECT-Fenster | -109,8 | -155,4 | -115,4 |
| Hamming-Fenster | -115,6 | -175,7 | -121,1 |
| Hann-Fenster | -118,8 | -206,1 | -124,2 |
| Blackman-Fenster | -119,9 | -207,1 | -125,4 |
| Kaiser-Fenster (b = 10) | -120,3 | -207,5 | -125,9 |
| Mod. Kaiser-Fenster (b = 10) | -117,9 | -205,6 | -123,7 |

"A" bezeichnet die Summe von $|c(f_i)|^2$ für i = 1 bis i = N, das heißt die mittlere gesamte Clutter-Leistung;
"B" bezeichnet $|c(f_{N/2})|^2$, das heißt die minimale Clutter-Leistung; während
"C" den Wert $|c(f_1)|^2$ bezeichnet, das heißt die maximale Clutter-Leistung bei einer diskreten Frequenz darstellt.

Als Fensterfunktionen werden vorzugsweise Blackman und Kaiser verwendet, wobei das Blackman-Fenster eine Ableitung eines Kaiser-Fensters ist. Durch diese Fensterfunktionen und Pulsformen wird das Spektrum der Zielechos verbreitert, so daß es zwar schwieriger ist, Ziele in dem gleichen Entfernungsintervall zu unterscheiden, das Vorhandensein von Zielen jedoch zuverlässig festgestellt werden kann.

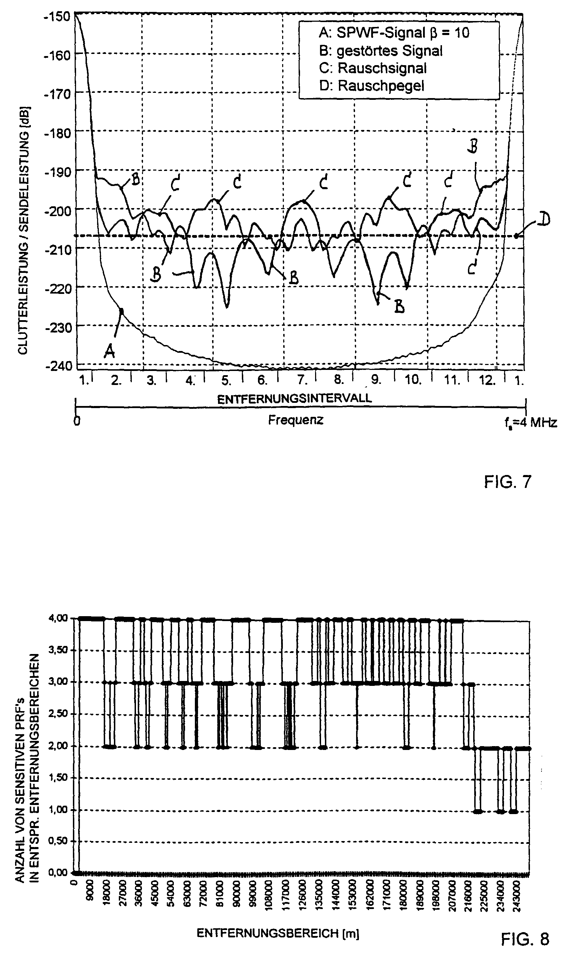

In praktischen Systemen ist die Form des empfangenen Pulses nicht ideal. Die Figuren 6a und b zeigen entsprechend verzerrte Wellenformen und ihre spektrale Charakteristik. Zur Verdeutlichung des Einflusses von Störungen und Amplitudenschwankungen in der Größe von 10% der tatsächlichen Amplitude wird eine SPWF-Pulsform modifiziert. Die sich ergebenden Clutter-Störungen für solche Pulse sind in Figur 7 gezeigt.

Ein weiterer wichtiger Gesichtspunkt ist die Signalleistung. Durch geeignete Puls-Formung ist die Pulsleistung geringer, als im Falle des rechteckigen Referenzpulses. Dies ist in Tabelle 3 dargestellt, in der die Werte des Leistungsverlustes aufgrund der Pulsform im Vergleich zu einem rechteckigen Puls mit 79 Unterpulsenvon je 0,25μs angegeben sind. Da die spektrale Leistung der Nebenkeulen-Clutter in dem zweiten und höheren Entfernungsbereichen niedriger ist, als das Rauschen, ist es wichtig, soviel wie möglich Signalleistung auszusenden. Aus diesem Grund müssen die einzelnen Impulse möglichst lang sein.

Tabelle 3

| Anzahl von Unterpulsen $L_C$ | RECT [dB] | RCS mit 40% Plateau [dB] | SPWF (b = 10, 0% Plateau), [dB] |
|---|---|---|---|
| 37 | **-6,59** | **-9,99** | **-14,98** |
| 63 | **-1,96** | **-5,28** | **-10,26** |
| 79 | **0** | **-3,3** | **-8,26** |

Ausgehend von diesen Erkenntnissen wurde nun eine besonders vorteilhafte Dimensionierung für ein Radar-System mit mittlerer Pulsfolgefrequenz (MPRF) ermittelt. Das Hauptproblem besteht in der Trennung zwischen Clutter- und Ziel-Echos. Da die Clutter-Echos nur in dem ersten Entfernungsintervall empfangen werden, ist eine Trennung durch ein Ausblenden von Signalen aus dem ersten Entfernungsintervall möglich. Wie oben erläutert wurde, werden die Sendeimpulse ferner zur Verringerung der Nebenkeulen geformt. Mögliche Pulsformen sind SPWF (b = 7, 10) oder RCS (Plateau = 0%). Aufgrund ihrer geringeren Nebenkeulen werden jedoch vorzugsweise nur SPWF (b = 10) Pulse verwendet. Als Fensterfunktion wird vorzugsweise die Blackman-Funktion verwendet, da sie ähnliche Eigenschaften aufweist, wie die Kaiser-Funktion (b = 10), jedoch eine geringfügig kleinere spektrale Dehnung des Signals bewirkt.

Die Abtastfrequenz sollte so hoch wie möglich gewählt werden und beträgt im vorliegenden Fall $f_a$ = 3,95 MHz. Als FFT-Länge im ersten Verarbeitungsschritt wurde N = 128 gewählt. Die FFT-Länge für den zweiten Verarbeitungsschritt muß als Kompromiß zwischen dem Rauschen und der Meßzeit festgelegt werden. Die Verwendung einer langen FFT führt nur zu einem geringfügig niedrigeren Rauschpegel, die Zeit für die Messung verlängert sich jedoch beträchtlich, und die Anforderungen an den Frequenzoszillator steigen. Aus diesem Grund wird die FFT-Länge für den zweiten Verarbeitungsschritt auf V = 64 eingestellt. Dies führt zu einem Frequenzhub von (E + V)Df. Der Frequenzversatz Df zwischen den Impulsen wird zu Df = $f_a$ / E > 2 $f_{Dmax}$ gewählt (Offset-Kriterium).

$f_{Dmax}$ bezeichnet dabei die Doppler-Frequenz, die entsprechend einer maximalen relativen Geschwindigkeit von 2250 m/s eingesetzt wird. Um diese Bedingung zu erfüllen, wird die maximale Anzahl von Entfernungsintervallen auf E = 14 festgelegt. Aufgrund der starken Nebenkeulen-Clutter ist eine Zieldetektion im Entfernungsintervall 14 nicht möglich. Für eine eindeutige Entfernungsauflösung von 240 km sollte die Pulswiederholfrequenz folgende Bedingungen erfüllen: PRF < c (E - 1) / 240.000 m ∗ 2 = 8125 Hz (PRF-Kriterium).

Um die Doppler-Mehrdeutigkeit in dem zweiten Signalverarbeitungsschritt zu beseitigen, muß eine zweite Messung mit einer anderen Pulswiederholfrequenz durchgeführt werden.

Um einen Bereich von 240 km eindeutig zu erfassen, müssen nicht nur zwei, sondern mindestens drei verschiedene Pulswiederholfrequenzen verwendet werden. Dies beruht auf der Umschaltung beim Senden und Empfangen. Während die Antenne sendet, ist der Empfänger deaktiviert. Die ersten c/2$T_{PB}$ Meter jedes Entfernungsbereiches sind ausgeblendet. Aus diesem Grund ist eine Detektion nicht möglich. Durch Verwendung von drei verschiedenen Pulsfolgefrequenzen ist es jedoch möglich, jeden Zielbereich ohne die ersten c/2$T_{PB}$ Meter des ersten Entfernungsbereiches zu detektieren und die Doppler-Mehrdeutigkeit aufzulösen.

Es werden bevorzugt zum Beispiel folgende Werte gewählt: PRF1 = 7,5 KHz, PRF2 = 8,18 KHz, PRF3 = 8,86 KHz mit einem Puls, der aus 37 Unterpulsen mit einer Dauer von jeweils 0,25 μs besteht, so daß sich ein eindeutiger Bereich von 223 km ergibt, oder PRF1 = 97 KHz, PRF2 = 7,5 KHz, PRF3 = 8,5 KHz mit einem Puls, der aus 30 Unterpulsen besteht, die jeweils eine Dauer von 0,25 μs aufweisen, so daß sich ein eindeutiger Bereich von 282 km ergibt.

Der Nachteil bei diesen beiden Dimensionierungen liegt in ihrem relativ geringen Tastverhältnis. Dadurch verschlechtert sich der Signal/Rausch-Abstand (S/N). Aufgrund des Rauschens müssen relativ hohe Tastverhältnisse wie zum Beispiel 63 oder 79 codierte Unterpulse mit einer Dauer von 0,25 μs verwendet werden. Als Alternative dazu müssen vier verschiedene Pulsfolgefrequenzen verwendet werden. Die einzige Voraussetzung ist, daß die Detektion in einem bestimmten Bereich mit zwei verschiedenen Pulsfolgefrequenzen erfolgt.

Figur 8 zeigt die Anzahl von wirksamen Pulsfolgefrequenzen für Ziele in einem bestimmten Bereich. Folgende Sätze von Pulsfolgefrequenzen wurden verwendet: PRF1 = 7,5 KHz ($D_u$ = 15%), PRF2 = 7,73 KHz ($D_u$ = 15,46%), PRF3 = 8,85 KHz ($D_u$ = 17,7%), PRF4 = 9,15 KHz ($D_u$ = 18,3%) bei einer Pulslänge von 79 Unterpulsen von

jeweils 0,25 μs.

Aufgrund der vorgeschriebenen PRF-Auswahl und der Begrenzung auf E = 14 Entfernungsbereiche vermindert sich die Empfindlichkeit bei Zielbereichen von mehr als 220 km. In diesen Bereichen sind nur die ersten zwei Pulsfolgefrequenzen relevant. Bei höheren Abtastfrequenzen vermindern sich die Beschränkungen des Systems. Die größte Beschränkung liegt gegenwärtig in der vorgeschriebenen Wahl des Frequenzoffsets Df, durch das die Anzahl der Entfernungsintervalle E begrenzt wird, sowie in der oben angeführten PRF-Auswahl, welche die Wahl der Pulsfolge-Frequenz bestimmt.

Zusammengefaßt werden die Werte also wie folgt gewählt: FFT-Länge im ersten Signalverarbeitungsschritt: N = 128; FFT- Länge im zweiten Signalverarbeitungsschritt: M = 64; Anzahl von Entfernungsintervallen E = 14; Anzahl von Impulsen: V + Überwachungsintervall mit E Impulsen; Trägerfrequenz: $f_t$ = 8,5 GHz; Pulswiederholfrequenzen: PRF = 7,5 KHz, 7,73 KHz, 8,85 KHz, 9,15 KHz; Abtastfrequenz pro Folge: $f_a$ = 3,95 MHz; Frequenzhub: etwa 22 MHz; Anzahl von Unterpulsen: $L_c$ = 79 (zur Modulation der Pulsform); Frequenzversatz von Puls zu Puls: Df = $f_a$ / E = 282,15 KHz ; die sich ergebende Entfernungsauflösung: DR = $L_c$ * 37,5 m = 2.962 m ; Dopplerauflösung: Dv = 2 m/s; erforderliche Zeit auf dem Ziel: $T_{ot,mind.}$ = 37,83 ms.

Das beschriebene Frequenz-Sprung-Modell ist am besten für einen Such-Modus mit großer Reichweite geeignet. Es wurde gezeigt, daß durch die Verwendung von frequenzmodulierten Pulsen die Clutter- und Ziel-Echos des zweiten und höherer Entfernungsintervalle getrennt werden können. Die erforderlichen Voraussetzungen dafür sind erfüllt. Die Doppler-Auflösung ist relativ niedrig, allerdings ist die Entfernungsauflösung relativ hoch. Der erforderliche Frequenzhub von 22 MHz ist niedriger als 1/20 der Trägerfrequenz und sollte somit kein technisches Problem darstellen. Alle anderen Parameter erfüllen die Anforderungen. Im Gegensatz zu bekannten MPRF-Radargeräten bleibt als einziges Problem die Rauschleistung. Eine Detektion ist für größere Entfernungen nur durch das Signal/Rausch-Verhältnis (S/N) begrenzt und ist unabhängig vom Signal/Clutter-Verhältnis (S/C).

**Patentansprüche**

1. Verfahren zur Signalerzeugung und Signalverarbeitung in Impuls-Radargeräten zur Detektion von Radarzielen, dadurch gekennzeichnet, daß sich wiederholende Pulsfolgen ausgesendet werden, die jeweils eine erste und eine zweite vorbestimmte Anzahl (E, V) von einzelnen Impulsen aufweisen, deren Trägerfrequenzen jeweils eine vorbestimmte Differenz Df zueinander aufweisen, und daß die durch Reflektion empfangenen Signale zum Erkennen und Ausblenden von Cluttersignalen im Hinblick auf die Impulslaufzeit und eine Dopplerverschiebung ausgewertet werden.

2. Verfahren nach Anspruch 1, dadurch gekennzeichnet, daß in einem ersten Verarbeitungsschritt für die erste Anzahl E von empfangenen Impulsen Abtastwerte erzeugt werden, die mit einer Fensterfunktion gewichtet und durch eine erste FFT in den Spektralbereich transformiert werden.

3. Verfahren nach Anspruch 2, dadurch gekennzeichnet, daß in einem zweiten Verarbeitungsschritt die mit dem ersten Verarbeitungsschritt erzeugten spektralen Komponenten für die zweite Anzahl V von empfangenen Impulsen einer zweiten FFT unterzogen werden.

4. Verfahren nach einem der Ansprüche 1 bis 3, dadurch gekennzeichnet, daß die Impuls-Formen durch sphäroidische Wellenfunktionen (SPWF) gebildet sind.

5. Verfahren nach einem der Ansprüche 1 bis 3, dadurch gekennzeichnet, daß die Impuls-Formen durch ansteigende Cosinus-Pulse (RCS) gebildet sind.

6. Verfahren nach einem der Ansprüche 2 bis 5, dadurch gekennzeichnet, daß die Fenster-Funktion zur Reduzierung des Einflusses von über die Nebenkeulen empfangenen Clutter-Signalen mit einer Blackman- oder Kaiser-Funktion gewichtet wird.

7. Verfahren nach Anspruch 6, dadurch gekennzeichnet, daß zur Auswertung der durch Reflektion empfangenen Signale die Sendeimpulse im Hinblick auf die Pulsfolgefrequenz und / oder die Länge der Impulse verändert werden.

$f_T + (V + E - 1)\Delta f$      $f_T + V\Delta f$   $f_T + (V-1)\Delta f$   $f_T + (V-2)\Delta f$      $f_T + \Delta f$   $f_T$      ZEIT

ÜBERWACHUNGSINTERVALL        SENDEFOLGE

**FIG. 1**

FENSTER

VERARBEITUNGSRICHTUNG

$f_t + M\Delta f$      $f_t + (M-1)\Delta f$    $f_t + (M-2)\Delta f$    $f_t + \Delta f$    $f_t$

FFT

ABTASTWERTE PRO PULSSEQUENZ = $f_a$ / PRF*E
ABTASTWERTE PRO IMPULS = $f_a$ / PRF
ABTASTWERTE PRO FENSTER = N

1. FENSTER

2. FENSTER

U

S

k. FENSTER

**FIG. 2**

PULSBEREICHE

FENSTER

V. PULSBEREICH

VERARBEITUNGSRICHTUNG

ENTFERNUNGSBEREICH
(1-DIM. ENTFERNUNGS-
DOPPLER-MATRIX)

j. FENSTER

2.
1.

2. PULSBEREICH

1. PULSBEREICH

0 1 2

N-1=127

FFT-LÄNGE V

FIG. 3

A: RECT-Signal
B: RCS 40% Plateau
C: RCS 0% Plateau
D: SPWF β = 7
E: SPWF β = 10
F: Rauschpegel

CLUTTERLEISTUNG / SENDELEISTUNG [dB]

-120

-140

-160

-180

-200

-220

B

C

F

A

D

E

1. 2. 3. 4. 5. 6. 7. 8. 9. 10. 11. 12. 1.

ENTFERNUNGSINTERVALL

0                    Frequenz                    $f_a$=4 MHz

FIG. 4

8

FIG. 5

FIG. 6a

FIG 6b

FIG. 7

FIG. 8